# EUROPEAN PATENT APPLICATION

(11) **EP 4 524 792 A1**
(43) Date of publication of application: **19.03.2025**
(21) Application number: 23315353.5
(22) Date of filing: 14.09.2023
(51) Int. Cl.: G06F 21/57, G06F 8/65, G06F 8/658

(54) **LOADING METHOD AND CODE LOADER**

(71) Applicant: THALES DIS FRANCE SAS, 92190 Meudon (FR)
(72) Inventor: Ferrari, Anthony, 83270 SAINT CYR SUR MER (FR); Pahaut, Olivier, 83270 SAINT CYR SUR MER (FR)
(74) Representative: Bricks, Amélie

(57) **Abstract**

The invention relates to code updating method for updating a previous program code (100), the method comprising the loading of an updated program code (200) for replacing the previous program code (100) and the following steps:
- allocating a duplication area (300) of non-volatile memory,
- copying non-volatile data (DO(A), DL(A)) of the previous program code (100) into the duplication area after adding a signature of the data in a header of said data (DO(A), DL(A)), the signature authenticating the data to be originating from the previous program code (100),
- formatting and transferring the copied data (DO(B), DL(B)) from the duplication area (300) to a non-volatile memory area (250) allocated for the non-volatile data of the updated program code (200),
- validating the updated program code (200) replaces the previous program code,
- releasing the non-volatile memory area (150) allocated for the non-volatile data of the previous program code (100).

## Description

### Technical Field

The invention relates to a loading method and to a code loader which is particularly interesting for enabling rollback operation after the updating of a code which manipulates sensitive data.

### Background Art

Loading a code is a common operation made by operating system or by a loader program. For embedded system, the code is loaded in a non-volatile area of the memory which can be executed. For sensitive embedded system, the code can be authenticated before allowing its execution. The loading can also be an update of a previous code. In case of an update, data are transferred from the previous version to the next version by indication of the memory localization of said data.

Code updates are made for correcting bugs or adding other functionalities to a previous code. Sometimes, a code update still contains bugs and new code update is made later with the correction of the bugs. The time for having a new code update available can take a few hours, a few days or a few weeks. For embedded system, in which some bugs may create some safety problem, waiting a few weeks implies not to use the system. If the system is an automotive vehicle or a plane, then the automotive vehicle or the plane should not be used till the bug is corrected. Another solution is to reload to the previous code but returning to a previous code is generally not possible for several reasons. Amongst the different reasons, one is related to the data. Some data can be dedicated to a program and should be adapted from the previous code to the updated code. Some other data should be asserted by the program code to warrant the data integrity. For a code update, the data are only planned to be transferred from the previous code to the updated code. Loader never manages the possibility to return the data from an updated code.to a previous code and this may render impossible to return to a previous code in some embedded system.

### Summary of the Invention

The invention tries to solve the problem of rollback of non-volatile data in case of returning to a previous code. The invention proposes a method for updating a code that enables to securely retrieve the data of the previous code.

The invention is a code updating method for updating a previous program code. The method comprises the loading in a non-volatile memory of an updated program code for replacing the previous program code. The method further comprises the following steps:
- allocating a duplication area of non-volatile memory, said duplication area being larger than a non-volatile memory area allocated for the non-volatile data of the previous program code,
- copying non-volatile data of the previous program code into the duplication area after adding a signature of the data in a header of said data, the signature authenticating the data to be originating from the previous program code,
- formatting and transferring the copied data from the duplication area to a non-volatile memory area allocated for the non-volatile data of the updated program code,
- validating the updated program code replaces the previous program code,
- releasing the non-volatile memory area allocated for the non-volatile data of the previous program code.

Preferentially, non-volatile data can comprise static data and/or dynamic data for which the last value is important. Each time a dynamic data is modified by the updated program code, the modified dynamic data is copied in the duplication area, information being included in a header of said modified dynamic data for indicating which dynamic data is replaced by this modified dynamic data.

For securely asserting the modification of the data, the header further can comprise a signature of the modified dynamic data and of the information, the signature authenticating the data to be modified by the updated program code.

According to a first embodiment, the information included in the header can comprise a cypher block chaining originating from the replaced dynamic data of the previous program code.

According to a second embodiment, the information included in the header comprises a blockchain originating from the replaced dynamic data of the previous program code.

For restoration of the static data of the previous program code, the method can comprise the steps of:
- allocating a new non-volatile memory area for the non-volatile data of the previous program code,
- copying static data from the duplication area to the new non-volatile memory area allocated for the non-volatile data of the previous program code if the static data comprises the signature authenticating the static data to be originating from the previous program code,
- validating the previous program code replaces the updated program code,
- erasing the updated program code and the non-volatile memory area allocated for the non-volatile data of the updated program code.

For restoration of the dynamic data of the previous program code, the method can comprise the steps of:
- allocating a new non-volatile memory area for the non-volatile data of the previous program code,
- copying dynamic data from the duplication area to the new non-volatile memory area allocated for the non-volatile data of the previous program code if information included in a header indicates the modified dynamic data replaces a dynamic data authenticated to be originating from the previous program code,
- validating the previous program code replaces the updated program code,
- erasing the updated program code and the non-volatile memory area allocated for the non-volatile data of the updated program code.

For avoiding a too large memory occupation, the duplication area can be released either after a restoration of the previous program code or after an action of an operator estimating that the updated code is definitely validated.

As a variant, the duplication area can be released after the expiration of a predetermined period. The predetermined period should be sufficiently long for estimating that the updated code is completely free of bugs.

Furthermore, the invention is also a program loader for updating a previous program code, said program loader being configured for loading an updated program code in a non-volatile memory for replacing the previous program code. The program loader is configured to :
- allocate a duplication area of non-volatile memory, said duplication area being larger than a non-volatile memory area allocated for the non-volatile data of the previous program code,
- copy non-volatile data of the previous program code into the duplication area after adding a signature of the data in a header of said non-volatile data, the signature authenticating the data to be originating from the previous program code,

- format and transfer the copied non-volatile data from the duplication area to a non-volatile memory area allocated for the non-volatile data of the updated program code,
- validate the updated program code replaces the previous program code,
- release the non-volatile memory area allocated for the non-volatile data of the previous program code.

Preferentially, non-volatile data can comprise static data and/or dynamic data for which the last value is important and wherein the program loader is configured for copying a modified dynamic data in the duplication area each time a dynamic data is modified by the updated program code, the modified dynamic data including information in a header of said modified dynamic data for indicating which dynamic data is replaced by this modified dynamic data.

For securely asserting the modification of the data, the header further can comprise a signature of the modified dynamic data and of the information, the signature authenticating the data to be modified by the updated program code.

For restoration of the previous program code with its static data, the program loader can be configured for restoring the previous program code by:
- allocating a new non-volatile memory area for the non-volatile data of the previous program code,
- copying static data from the duplication area to the new non-volatile memory area allocated for the non-volatile data of the previous program code if the static data comprises the signature authenticating the static data to be originating from the previous program code,
- validating the previous program code replaces the updated program code,
- erasing the updated program code and the non-volatile memory area allocated for the non-volatile data of the updated program code.

For restoration of the previous program code with its dynamic data, the program loader can be configured for restoring the previous program code by:
- allocating a new non-volatile memory area for the non-volatile data of the previous program code,
- copying dynamic data from the duplication area to the new non-volatile memory area allocated for the non-volatile data of the previous program code if information included in a header indicates the modified dynamic data replaces a dynamic data authenticated to be originating from the previous program code,
- validating the previous program code replaces the updated program code,
- erasing the updated program code and the non-volatile memory area allocated for the non-volatile data of the updated program code.

### Brief description of the Drawings

The invention will be detailed with reference to the annexed drawings in which:
Figure 1 illustrates the upgrade of a program code according to prior art,
Figure 2 illustrates the upgrade of a program code according to the invention.
Figure 3 illustrates a period of observation of the upgraded program code, and
Figure 4 illustrates a rollback operation to return to the previous program code.

### Detailed Description of the invention

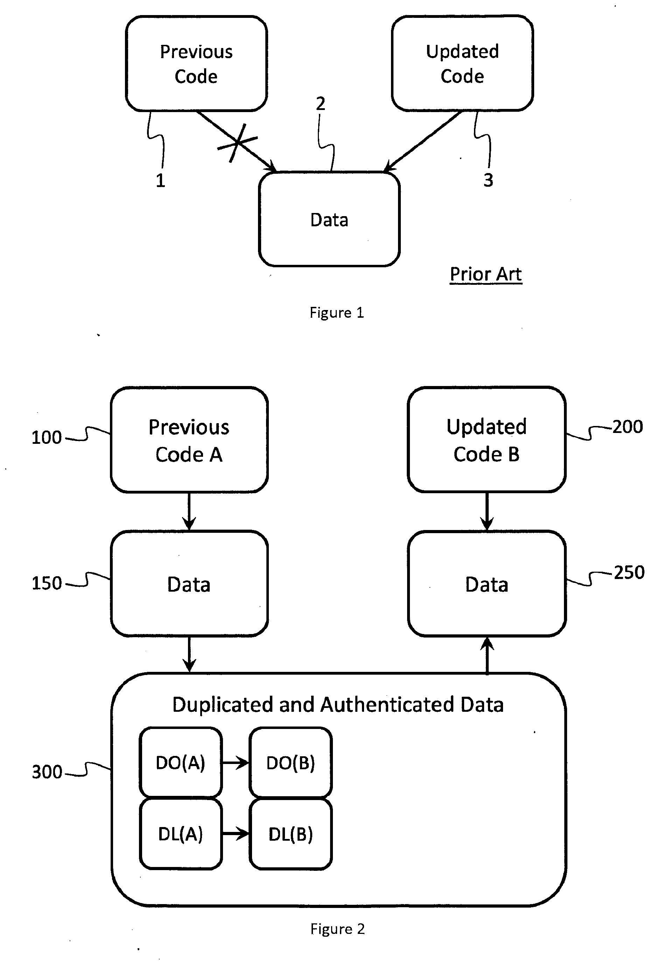

First, we have to detail the upgrade of a program code according to prior art in relation with figure 1. A previous program code 1 uses data 2 and should be replaced by an upgdated code 3. The data 2 are initially linked to the previous program code 1. A loader starts to copy in the program memory the updated code 3. After the loading of the updated code 3, the data 2 are transferred to the updated code 3. The data 2 of the previous program code 1 are identified and the address pointer are simply passed to the updated code 3. The updated code 3 generally comprises a sub-program for the importation of the data 2 in such a way to modify their format if needed. During the importation of data, some parameter data proper to the previous program code 1 can be deleted and new parameters can be setup by the updated code 3.

Then, the link between the data 2 and the previous program code 1 is deleted, and the previous program code 1 can also be deleted. Such a method of program update does not allow roll back operation for returning to the previous program code.

So, the invention will be now described in relation with figure 2 to 4 in which the code update is made for allowing a rollback operation for returning to a previous program code. We must precise that the invention takes place into an embedded device that is not always connected to a network.

Figure 2 illustrates how an updated program code is installed.

A previous program code 100 is in a program memory of an embedded device. A non-volatile memory area 150 is allocated for storing the data of the previous program code. In this area 150, only the previous program code can manipulate the data.

For updating the previous program code 100, a program loader copies an updated program code 200 in another area of the program memory of the embedded device. A non-volatile memory area 250 is allocated for storing the data of the updated program code. Then, a duplication area 300 of non-volatile memory is allocated for the data transfer. The duplication area 300 is created for managing the transfer of data between two memory area 150 and 250 but also for tracing these data during an observation period of the updated program code. In the duplication area, the data contain additional metadata for tracing the data. The data 150 of the previous program code 100 are copied in the duplication area 300 but are separated in static data DO(A) which corresponds to static parameters of previous program code 100, which should be returned to their original value in case of rollback to the previous program code, and dynamic data DL(A) corresponding to the last value saved by previous program code 100 and which may keep evolving after the update and should not be returned to an older value in case of rollback so that their current value is preserved. In such a way to ascertain in the duplication area 300 that these data are originating from previous program 100, a signature of the data is added in a header of each data DO(A) and DL(A). The signature is representative of the data and of the previous program 100 for authenticating that the data are coming from the data 150 of the previous program 100. Static data DO(A) can be constituted of parameters of the previous program code 100. In the case of automotive, the parameters can be proper to the vehicle and are formatted according to the previous program code 100. Dynamic data DL(A) can be sensitive data that are evolutive but should be warranted. In case of automotive, such kind of data can be representative of many things that evolve in time and that can be sensitive like the preference of the driver, level of wear of some components, or the mileage.

After the data copy, the static data DO(A) and the dynamic data DL(A) of the previous program 100 are formatted into static data DO(B) and dynamic data DL(B) of the updated program code 200. The static data DO(B) of the updated program code 200 data are stored into the duplication area 300 with a signature added in their headers authenticating that these static data DO(B) are static data of the updated program code 200. The dynamic data DL(B) of the updated program code 200 are also stored into the duplication area 300 but with information containing an added signature authenticating that these dynamic data DL(B) are dynamic data of the updated program code 200 and also for indicating that these dynamic data DL(B) are coming from the dynamic data DL(A) of the previous program code 100.

Once the static data DO(B) and dynamic data DL(B) are formatted in the duplication area 300, these data DO(B) and DL(B) can be copied in the non-volatile memory area 250 allocated for storing the data of the updated program code 200 and the non-volatile memory area 150 allocated for the non-volatile data of the previous program code 100 can be erased. The person skilled in the art will understand that only the data are copied in the memory area 250 and that the metadata containing signatures and traceability information are not copied in the memory area 250. The updated program code 200 can be validated for replacing the previous program code 100.

According to the invention the duplication area 300 is maintained during the observation period extending after the updated code 200 is validated. The end of the observation period can be triggered asynchronously by an operator estimating that the updated code 200 is definitely validated, or after a rollback operation for returning to the previous code 100. By "definitely validated", the person skilled in the art understand that it will be not necessary to have a rollback operation in the future. At the end of the observation period, the duplication area 300 can be deleted together with either the previous code 100 when the updated code 200 is maintained, or the updated code 200 when a rollback operation occurs.

Alternately, the end of the observation period can be triggered automatically after a predetermined period which has a duration sufficiently long for running the updated code 200 in real situation and for considering that there is no bug and that it is not necessary to have a rollback operation. For an automotive vehicle, the predetermined period can be a few weeks or a few months, in such a way that the vehicles with the updated code 200 have been used in numerous conditions without any report of a roll back operation.

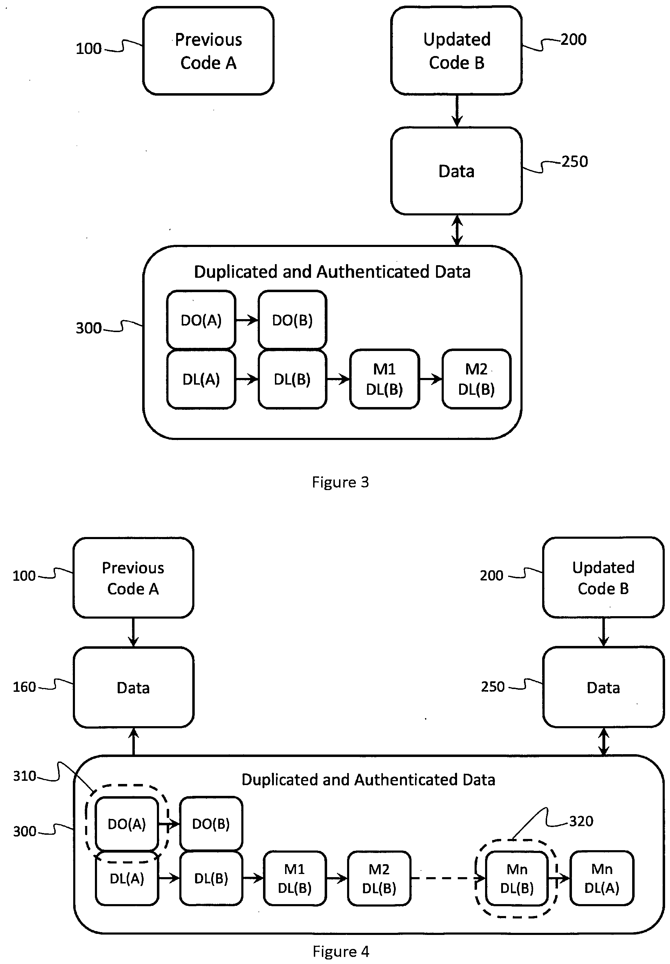

After the validation of the updated code 200 and as long as the duplication area 300 is not deleted, the loader program or the operating system traces all modifications made on the dynamic data into the duplication area 300. Each time a dynamic data is modified by the updated program code 200, said dynamic data is copied in the duplication area 300. As shown on figure 3, the copy of modified dynamic data M1(DL(B)) or M2(DL(B)) is made with a link to the replaced data. The link is a piece of information included in header of said modified dynamic data M1(DL(B)) or M2(DL(B)) for indicating which dynamic data DL(B) or M1(DL(B)) is replaced by this modified dynamic data M1(DL(B)) or M2(DL(B)). A signature of the data and of the link is also included in the header for securely asserting it has been generated by the updated program code 200. The information of the modified dynamic data M1(DL(B)) or M2(DL(B)) is of the same nature than the information of the dynamic data DL(B). The information enables to have a traceability on the dynamic data for warranting its original source.

Several methods can be used for computing the information of link. The information representative of the link can be made by a cypher block chaining method well known in the art for providing a signature with the modified dynamic data, the code owner of the modified dynamic data, a counter of modification, and the signature of the replaced data. Another possibility is to use a blockchain method wherein each new block contains the modified data and points to the replaced data.

The aim of the information is to be capable to securely verify the origin of a modified dynamic data. As an example, modified dynamic data M2(DL(B)) contains information indicating that said modified dynamic data M2(DL(B)) is owned by the updated program code 200 and that the modified dynamic data M2(DL(B)) replaces modified dynamic data M1(DL(B)). The modified dynamic data M1(DL(B)) contains information indicating that said modified dynamic data M1(DL(B)) is owned by the updated program code 200 and that the modified dynamic data M1(DL(B)) replaces the dynamic data DL(B). The dynamic data DL(B) contains information indicating that said dynamic data DL(B) is owned by the updated program code 200 and that the dynamic data DL(B) replaces the dynamic data DL(A) of the previous program code 100.

With the traceability of the dynamic data DL(B) and of the modified dynamic data Mn(DL(B)), it is possible to securely restore the previous program code 100 if a bug is detected during the running of the updated program code 200.

The program loader first allocates a new non-volatile memory area 160 for the non-volatile data of the previous program code 100. The restoration of the data is made differently, depending on the type of data.

For static data, the program loader has to identify the static data 310 of the previous program code 100 to copy from the duplication area 300 to the new non-volatile memory area 160. Such identification is made by verification of the signatures of static data DO(A) and DO(B) for choosing the static data DO(A) which can be authenticated to be the data of the previous program code 100.

For dynamic data, the program loader reads the information of the last modified dynamic data 320 and verifies all the chained modified dynamic data to authenticate if the chain of modified dynamic data M1(DL(B)) to Mn(DL(B)) is originating from the dynamic data DL(A) of the previous program code 100. Once the last modified dynamic data Mn(DL(B)) is authenticated, the last modified dynamic data Mn(DL(B)) is formatted to correspond to modified dynamic data Mn(DL(A)) of the previous program code 100.

After formatting the modified dynamic data Mn(DL(A)), the dynamic data is copied in the new non-volatile memory area 160, without the tracing information. Then, the previous program code 100 can be validated to be operational and the updated code 200, the memory area 250 and the duplication area 300 can be deleted.

In the described example, only one static data and only one dynamic data have been detailed. The person skilled in the art can understand that these data can constitute a block of data including several data. For having more flexibility, more particularly for dynamic data, it is possible to trace individually several dynamic data using the same method.

The invention does not necessitate that the program uses both static and dynamic data. In case there is only static data or only dynamic data, the person skilled in the art will take only the part corresponding to static or to dynamic data.

## Claims

1. A code updating method for updating a previous program code (100), the method comprising the loading in a non-volatile memory of an updated program code (200) for replacing the previous program code (100) wherein the method comprises the following steps:
- allocating a duplication area (300) of non-volatile memory, said duplication area (300) being larger than a non-volatile memory area (150) allocated for the non-volatile data of the previous program code (100),
- copying non-volatile data (DO(A), DL(A)) of the previous program code (100) into the duplication area (300) after adding a signature of the data in a header of said data (DO(A), DL(A)), the signature authenticating the data to be originating from the previous program code (100),
- formatting and transferring the copied data (DO(B), DL(B)) from the duplication area (300) to a non-volatile memory area (250) allocated for the non-volatile data of the updated program code (200),
- validating the updated program code (200) replaces the previous program code,
- releasing the non-volatile memory area (150) allocated for the non-volatile data of the previous program code (100).

2. The method of claim 1, wherein non-volatile data comprises static data (DO(A), DO(B)) and/or dynamic data (DL(A), DL(B)) for which the last value is important and wherein each time a dynamic data (DL(B)) is modified by the updated program code (200), the modified dynamic data (M1(DL(B)),... Mn(DL(B))) is copied in the duplication area (300), information being included in a header of said modified dynamic data (M1(DL(B)),... Mn(DL(B))) for indicating which dynamic data (DL(B), M1(DL(B), M2(DL(B))) is replaced by this modified dynamic data.

3. The method of claim 2, wherein the header further comprises a signature of the modified dynamic data (M1(DL(B)),... Mn(DL(B))) and of the information, the signature authenticating the data to be modified by the updated program code (200).

4. The method of claim 2 or 3, wherein the information included in the header comprises a cypher block chaining originating from the replaced dynamic data (DL(A)) of the previous program code (100).

5. The method of claim 2 or 3, wherein the information included in the header comprises a blockchain originating from the replaced dynamic data (DL(A)) of the previous program code (100).

6. The method of one of the claims 2 to 5, when a restoration of the previous program code (100) is performed, the method comprises the steps of:
- allocating a new non-volatile memory area (160) for the non-volatile data of the previous program code (100),
- copying static data (DO(A)) from the duplication area (300) to the new non-volatile memory area (160) allocated for the non-volatile data of the previous program code (100) if the static data (DO(A)) comprises the signature authenticating the static data (DO(A)) to be originating from the previous program code (100),
- validating the previous program code (100) replaces the updated program code (200),
- erasing the updated program code (200) and the non-volatile memory area (250) allocated for the non-volatile data of the updated program code (200).

7. The method of one of the claims 2 to 5, when a restoration of the previous program code (100) is performed, the method comprises the steps of:
- allocating a new non-volatile memory area (160) for the non-volatile data of the previous program code (100),
- copying dynamic data (320) from the duplication area (300) to the new non-volatile memory area (160) allocated for the non-volatile data of the previous program code (100) if information included in a header indicates the modified dynamic data (Mn(DL(B))) replaces a dynamic data (DL(A)) authenticated to be originating from the previous program code (100),
- validating the previous program code (100) replaces the updated program code (200),
- erasing the updated program code (200) and the non-volatile memory area (250) allocated for the non-volatile data of the updated program code (200)..

8. The method of one of the claims 1 to 7, wherein the duplication area (300) is released either after a restoration of the previous program code (100) or after an action of an operator estimating that the updated code 200 is definitely validated.

9. The method of one of the claims 1 to 8, wherein the duplication area (300) is released after the expiration of a predetermined period.

10. A program loader for updating a previous program code (100), said program loader being configured for loading an updated program code (200) in a non-volatile memory for replacing the previous program code (100) wherein the program loader is configured to :
- allocate a duplication area (300) of non-volatile memory, said duplication area (300) being larger than a non-volatile memory area (150) allocated for the non-volatile data of the previous program code (100),
- copy non-volatile data (DO(A), DL(A)) of the previous program code (100) into the duplication area (300) after adding a signature of the data in a header of said non-volatile data (DO(A), DL(A)), the signature authenticating the data to be originating from the previous program code (100),
- format and transfer the copied non-volatile data (DO(B), DL(B)) from the duplication area (300) to a non-volatile memory area (250) allocated for the non-volatile data of the updated program code (200),
- validate the updated program code (200) replaces the previous program code (100),
- release the non-volatile memory area (150) allocated for the non-volatile data of the previous program code (100).

11. The program loader of claim 10, wherein non-volatile data comprises static data (DO(A), DO(B)) and/or dynamic data (DL(A), DL(B)) for which the last value is important and wherein the program loader is configured for copying a modified dynamic data (M1(DL(B)),'... Mn(DL(B))) in the duplication area (300) each time a dynamic data (DL(B)) is modified by the updated program code (200), the modified dynamic data (M1(DL(B)),... Mn(DL(B))) including information in a header of said modified dynamic data (M1(DL(B)),... Mn(DL(B))) for indicating which dynamic data (DL(B), M1(DL(B), M2(DL(B))) is replaced by this modified dynamic data (M1(DL(B)),... Mn(DL(B))).

12. The program loader of claim 10 or 11, wherein the header further comprises a signature of the modified dynamic data (M1(DL(B)),... Mn(DL(B))) and of the information, the signature authenticating the data to be modified by the updated program code (200).

13. The program loader of claim 11 or 12, wherein said program loader is configured for restoring the previous program code (100) by:
- allocating a new non-volatile memory area (160) for the non-volatile data of the previous program code (100),
- copying static data (DO(A)) from the duplication area (300) to the new non-volatile memory area (160) allocated for the non-volatile data of the previous program code (100) if the static data (DO(A)) comprises the signature authenticating the static data (DO(A)) to be originating from the previous program code (100),
- validating the previous program code (100) replaces the updated program code (200),
- erasing the updated program code (200) and the non-volatile memory area (250) allocated for the non-volatile data of the updated program code (200).

14. The program loader of claim 11 or 12, wherein said program loader is configured for restoring the previous program code (100) by:
- allocating a new non-volatile memory area (160) for the non-volatile data of the previous program code (100),
- copying dynamic data (320) from the duplication area (300) to the new non-volatile memory area (160) allocated for the non-volatile data of the previous program code (100) if information included in a header indicates the modified dynamic data (Mn(DL(B))) replaces a dynamic data (DL(A)) authenticated to be originating from the previous program code (100),
- validating the previous program code (100) replaces the updated program code (200),
- erasing the updated program code (200) and the non-volatile memory area (250) allocated for the non-volatile data of the updated program code (200).
